# EUROPÄISCHE PATENTSCHRIFT

(11) **EP 3 110 295 B1**
(45) Veröffentlichungstag und Bekanntmachung des Hinweises auf die Patenterteilung: **03.04.2019**
(21) Anmeldenummer: 15709860.9
(22) Anmeldetag: 23.02.2015
(51) Int. Cl.: A47G 1/06

(54) **TRÄGERPLATTE, TRÄGERPLATTENVERBUND AUS MINDESTENS ZWEI TRÄGERPLATTEN, TRÄGERPLATTENSYSTEM UND VERFAHREN ZUM VERBINDEN VON MINDESTENS ZWEI TRÄGERPLATTEN**
CARRIER PLATE, CARRIER-PLATE ASSEMBLY MADE UP OF AT LEAST TWO CARRIER PLATES, CARRIER-PLATE SYSTEM AND METHOD FOR CONNECTING AT LEAST TWO CARRIER PLATES
PLAQUE DE SUPPORT, ASSEMBLAGE DE PLAQUES DE SUPPORT CONSTITUÉ D'AU MOINS DEUX PLAQUES DE SUPPORT, SYSTÈME DE PLAQUES DE SUPPORT ET PROCÉDÉ DE LIAISON D'AU MOINS DEUX PLAQUES DE SUPPORT

(30) Priorität: 24.02.2014 DE 102014102361
(43) Veröffentlichungstag der Anmeldung: 04.01.2017
(73) Patentinhaber: Hogrefe, Thomas, 28195 Bremen (DE)
(72) Erfinder: Hogrefe, Thomas, 28195 Bremen (DE)
(74) Vertreter: Wasiljeff, Johannes M.B.
(86) Internationale Anmeldenummer: PCT/EP2015/053753
(87) Internationale Veröffentlichungsnummer: WO 2015/124775

(56) Entgegenhaltungen:
- DE-A1- 2 258 012
- DE-U1- 7 912 191
- GB-A- 2 053 675
- US-A- 5 588 240
- US-A1- 2008 204 474
- US-B1- 6 347 472

## Beschreibung

Die Erfindung betrifft eine Trägerplatte zur Aufnahme eines Präsentationsobjektes gemäß dem Oberbegriff von Anspruch 1, einen Trägerplattenverbund aus mindestens zwei derartigen Trägerplatten, ein Trägerplattensystem mit mindestens einer Trägerplatte sowie ein Verfahren zum Verbinden von mindestens zwei Trägerplatten.

Zweidimensionale Präsentationsobjekte, wie beispielsweise Fotos, Zeichnungen etc., oder auch dreidimensionale Präsentationsobjekte, wie z.B. Designobjekte, Buchstaben, Symbole etc., sind heutzutage als Wandschmuckgegenstände weit verbreitet. Dabei ist es oftmals wünschenswert, die Präsentationsobjekte gruppenweise zusammenzufassen, um diese als eine Gesamtheit zu präsentieren.

Herkömmlicherweise müssen die zusammenzufassenden Präsentationsobjekte nebeneinander aufgehängt oder auf eine gemeinsame Unterlage gebracht werden. Dadurch entsteht jedoch der Nachteil, dass ein kurzfristiges Ändern der Kombination der Präsentationsobjekte nicht oder nur umständlich möglich ist.

US 2008/204 474 A1 zeigt ein Doppelfenster-Display zur Anzeige von zwei Objekten mit zwei Rahmen, wobei die Rahmen derart zusammengesetzt werden, dass die Objekte aus zwei entgegengesetzten Richtungen betrachtet werden können. Die lösbare Befestigung der Rahmen erfolgt über Befestigungselemente innerhalb des Rahmens, insbesondere mittels Magneten.

DE 79 12 191 U1 zeigt einen Bausatz für eine kombinierbare Bildereinheit aus mehreren aneinandergefügten Bilderrahmen. Dazu weisen die Bilderrahmen an der Rückseite jeweils einen auf Abstand gehaltenen, umlaufenden Leistenrahmen auf, durch den Klammern hindurch gesteckt werden können, um jeweils zwei aneinandergrenzende Rahmen miteinander zu verbinden.

US 5,588,240 A zeigt einen ineinandergreifenden Bilderrahmen, wobei einzelne dieser Bilderrahmen zu einem modularen Bilderrahmen-System zusammengesetzt werden können. Dazu weist jeder Bilderrahmen puzzleförmige Stecker und Buchsen als geometrische Verriegelungselemente auf, um mehrere Bilderrahmen zu einer Collage zusammenzusetzen.

US 6,347,472 B1 zeigt einen Spiegel mit Rahmen und Mittel zum Anbringen von persönlichen Gegenständen an diesem Rahmen. Dazu weist der Rahmen eine Vielzahl von Öffnungen auf, in die Befestigungsleisten eingesteckt werden können. Zum Befestigen dieser Befestigungsleisten an dem Rahmen sind die Befestigungsleisten mit an die Öffnungen im Rahmen angepassten Vorsprüngen versehen, mit denen die Befestigungsleisten an dem Rahmen gehalten werden.

GB 2 053 675 A zeigt eine Haltevorrichtung für Grußkarten, die einen Streifen mit einem Verbindungsmittel an jedem Ende aufweist, wie z.B. Haken und Öse, so dass mehrere Streifen aneinander befestigt werden können. Ferner sind Haltemittel mit zwei Zungen vorgesehen, zwischen denen eine Grußkarte befestigt werden kann.

DE 20 2006 008 513 U1 zeigt ein Verbindungselement zur Verbindung von Einzelbildern. Diese können aufgrund der Verbindung zwar als eine Einheit aufgehängt werden, weisen aber den Nachteil auf, dass die einzelnen Wandelemente beabstandet zueinander angeordnet sind.

US 7 958 688 B2 zeigt ein Montagesystem zum Verbinden von Fliesen, bei dem ein gekrümmtes Befestigungsmittel in eine Nut auf der Unterseite der Fliese geschoben wird, wobei ein derartiges Montagesystem nicht für die Anordnung von Präsentationsobjekten geeignet ist.

DE 2 258 012 A zeigt eine Verriegelungs- oder Verbindungsvorrichtung zum Zusammenhalten einer Vielzahl von Gegenständen. Zum Verbinden von flächig ausgebildeten Elementen, wie z.B. zwei Bleche, ist das Verriegelungselement entweder oberhalb des Bleches oder unterhalb des Bleches angeordnet, wodurch das einheitliche Erscheinungsbild gestört wird und eine derartige Verbindungsvorrichtung für eine Präsentation ungeeignet ist.

US 4 912 863 A zeigt ein modulares Bilderrahmensystem zum beliebigen Zusammenfassen von Bildern zu einem Display. Dazu weist das System ein oder mehrere separate Verbindungselemente als ein Querstreifen auf.

Der Erfindung liegt die Aufgabe zugrunde, eine einfache Möglichkeit zur Verbindung von Präsentationsobjekten zu schaffen, um diese gruppenweise zusammenzufassen.

Die Erfindung löst diese Aufgabe mit einer Trägerplatte nach Anspruch 1, mit einem Trägerplattenverbund gemäß Anspruch 11, mit einem Trägerplattensystem gemäß Anspruch 12 und mit einem Verfahren zum Verbinden von mindestens zwei Trägerplatten nach Anspruch 13.

Die erfindungsgemäße Trägerplatte dient als Wandschmuck und weist eine Nutzfläche zur Anbringung eines Präsentationsobjektes und eine Rückseite mit darin integrierten Verbindungselementen auf, wobei mit mindestens einem Verbindungselement je Trägerplatte eine lösbare, vorzugsweise kraft-, form- und/oder reibschlüssige Verbindung zwischen mindestens zwei derartigen Trägerplatten herstellbar ist. Dadurch ist vorteilhaft eine Verbindung von Präsentationsobjekten schnell und unkompliziert immer wieder zu ändern.

Die Trägerplatte kann einstückig gefertigt sein, z.B. als ein Kunststoff-Spritzgussteil oder aus verschiedenen Materialien zusammengesetzt sein, um je nach Anforderung bzw. Einsatzbereich eine ausreichende Stabilisierung oder ein möglichst geringes Gewicht zu erhalten.

Bei der Herstellung einer derartigen Trägerplatte aus verschiedenen Materialien ist die relativ harte Deckschicht, welche die Nutzfläche aufweist, mit Positionierstiften und die weitere Plattenschicht mit Löchern versehen. Beim Zusammensetzen der einzelnen Schichten der Trägerplatte werden die Positionierstifte in die Löcher gesteckt, um eine einfache und genaue Positionierung der einzelnen Plattenschichten untereinander zu ermöglichen.

Bei einem alternativen Herstellungsverfahren der erfindungsgemäßen Trägerplatte werden zunächst verschiedene Materialschichten, wie z.B. eine Kunststoffplatte und eine Schaumstoffplatte, verbunden, insbesondere miteinander verklebt. Anschließend wird die eigentliche Trägerplatte aus diesem Materialverbund herausgefräst. In einem weiteren Fräsvorgang werden auf der Rückseite der Trägerplatte die einzelnen Verbindungselemente herausgetrennt, wobei die Einschnitttiefe bevorzugt bis innerhalb der ersten harten Deckschicht erfolgt.

Unter Präsentationsobjekte werden zweidimensionale Präsentationsobjekte, wie beispielsweise Fotos, Zeichnungen etc., aber auch dreidimensionale Präsentationsobjekte, wie z.B. Designobjekte, Buchstaben, Symbole etc. verstanden. Dabei ist die Trägerplatte erfindungsgemäß derart ausgestaltet, um als Wandelement an einer vertikalen Fläche befestigt zu werden.

Die Trägerplatte ist bevorzugt rechteckig oder quadratisch ausgebildet oder weist jedwede andere symmetrische Form auf, die abstandslos zu einer Fläche aneinandergefügt werden kann, beispielsweise eine sechseckige oder dreieckige Form. Dabei weisen die Trägerplatten untereinander die gleiche Größe auf oder sind verschieden groß ausgebildet. Bei Verwendung verschieden großer Trägerplatten sind diese vorteilhafterweise derart dimensioniert, dass sie zu einem lückenlosen Trägerplattenverbund verbindbar sind.

Das bedeutet beispielsweise bei rechteckig oder quadratisch ausgebildeten Trägerplatten, dass zwei aneinander angrenzende Trägerplatten zwei sich berührende Trägerplattenkanten aufweisen. Diese sich berührenden Trägerplattenkanten weisen entweder die gleiche Länge auf oder sind unterschiedlich lang ausgebildet. Bei verschieden lang ausgebildeten, sich berührenden Trägerplattenkanten beträgt die längere von diesen sich berührenden Trägerplattenkanten der einen Trägerplatte ein Vielfaches der kürzeren von diesen sich berührenden Trägerplattenkanten der anderen Trägerplatte.

Die Erfindung ist bei verschieden lang ausgebildeten sich berührenden Trägerplattenkanten nicht darauf beschränkt, dass die längere der sich berührenden Trägerplattenkanten ein Vielfaches der kürzeren der sich berührenden Trägerplattenkante beträgt. Ebenso sind sich berührende Trägerplattenkanten möglich, deren längere von diesen sich berührenden Trägerplattenkanten eine Seitenlänge aufweist, die ein Vielfaches des kleinsten gemeinsamen Teilers aus den Längeneinheiten der beiden sich berührenden Trägerplattenkanten beträgt. Dabei wird der kleinste gemeinsame Teiler der Längeneinheiten der beiden sich berührenden Trägerplattenkanten aus der Menge der echten Teiler gebildet und lediglich, wenn es sich bei einer der Längeneinheiten um eine Primzahl handelt aus der Menge der trivialen Teiler. So können z.B. eine Trägerplattenkante mit neun Längeneinheiten und eine Trägerplattenkante mit sechs Längeneinheiten verbunden werden, da der kleinste gemeinsame Teiler aus der Menge der echten Teiler drei beträgt und neun und sechs jeweils ein Vielfaches von drei betragen.

An jeder Trägerplattenkante ist mindestens ein Verbindungselement angeordnet, wobei die Verbindungselemente in die Rückseite der Trägerplatte integriert und alle Verbindungselemente identisch ausgebildet sind.

Die Verbindung zwischen zwei Trägerplatten wird durch zwei identisch ausgebildete Verbindungselemente je Verbindungsstelle gebildet, wobei jede Trägerplatte ein Verbindungselement je Verbindungsstelle für die Verbindung der Trägerplatten bereitstellt. Das hat den Vorteil, dass eine Verbindung zwischen zwei Trägerplatten jederzeit möglich ist, ohne Verwendung von Zusatzteilen.

Die Verbindungselemente sind auf der Rückseite der Trägerplatte verdeckt angeordnet, d.h. falls die Verbindungselemente keine Verbindung eingehen bzw. ungenutzt sind, sind sie derart in die Rückseite der Trägerplatte integriert, dass sie von der Nutzfläche der Trägerplatte aus nicht sichtbar sind und nicht über die Oberfläche der Rückseite hinausragen.

Ferner sind die Verbindungselemente derart ausgestaltet, um zwei oder mehr Trägerplatten mit jeweils in gleiche Richtung weisender Nutzfläche abstandslos zu verbinden. Dadurch lässt sich vorteilhafterweise auch ein größerer, einheitlicher Wandschmuck erzeugen.

Um Präsentationsobjekte, beispielsweise Fotos, Zeichnungen etc., wie auch 3D-Designobjekte, z.B. Buchstaben, Symbole etc. oder andere Anwendungen, vorteilhaft einfach auf die Trägerplatte zu bringen, ist die Nutzfläche der Trägerplatte z.B. mit einer Klebefläche versehen. Die Präsentationsobjekte lassen sich jedoch auch mittels Nieten oder Schrauben auf der Trägerplatte befestigen.

Die Verbindungselemente sind derart ausgestaltet, dass sie, für den Fall, dass sie keine Verbindung mit einer weiteren Trägerplatte eingehen, mit der jeweilig angrenzenden Trägerplattenkante bündig abschließen. Beispielsweise werden die Verbindungselemente in eine jeweilige zugehörige Ausnehmung auf der Rückseite der Trägerplatte gesteckt. Dadurch erhält die Trägerplatte vorteilhaft ein einheitliches Erscheinungsbild ohne störende Vertiefungen oder Überstände im Kantenbereich der Trägerplatte.

In einer weiteren bevorzugten Ausführungsform der Erfindung sind die Verbindungselemente als identisch ausgebildete Steckteile zum Herstellen einer Steckverbindung zwischen zwei Trägerplatten ausgebildet. Mit diesen puzzleartig gestalteten Steckteilen lassen sich die Trägerplatten abstandslos verbinden.

Dadurch, dass die Steckteile identisch ausgebildet sind, lassen sie sich in jede Ausnehmung auf der Rückseite der Trägerplatte stecken, so dass vorteilhaft die Trägerplatten beliebig an jeder Trägerplattenkante verbindbar sind, um eine individuelle Fläche zu erzeugen.

In einer weiteren bevorzugten Ausführungsform der Erfindung sind die Steckteile derart symmetrisch, puzzleförmig ausgestaltet, dass zwei zusammengelegte Steckteile um 90° gedreht in eine entsprechende Ausnehmung auf jeweils einer Rückseite der zu verbindenden Trägerplatte einsteckbar sind, wobei die Trägerplatten derart aneinandergelegt sind, dass die sich gegenüberliegenden freien Ausnehmungen auf der Rückseite eine gemeinsame Ausnehmung zur Aufnahme von zwei Steckteilen bilden.

Die symmetrische Ausgestaltung der Steckteile sorgt dafür, dass zwei zusammengelegte Steckteile vorteilhaft in eine zusammengelegte Ausnehmung von zwei angrenzenden Trägerplatten passgenau eingesteckt werden können, wodurch eine im Wesentlichen formschlüssige Verbindung zwischen den Trägerplatten entsteht.

In einer weiteren bevorzugten Ausführungsform der Erfindung ist eine Längsseite des Steckteils gerade ausgebildet, um bei Nichtgebrauch und bei Aufnahme in einer Ausnehmung auf der Rückseite der Trägerplatte vorteilhaft bündig mit der Trägerplatte abzuschließen.

Um eine besonders hohe Stabilität der Verbindung zwischen zwei Trägerplatten zu erzielen, sind die Trägerplatten bevorzugt aus verschieden Materialien mit unterschiedlicher Festigkeit zusammengesetzt. So weist die Trägerplatte beispielsweise eine erste, die Nutzschicht beinhaltende Plattenschicht aus einem harten Kunststoff-Spritzguss auf und eine zweite Plattenschicht aus einem weicheren Material als die erste Plattenschicht. Die zweite Plattenschicht sorgt vorteilhafterweise durch das weiche Material für eine bessere Reibung bei der Verwendung der Steckteile, wodurch vorteilhafterweise der Halt dieser Steckteile in der Ausnehmung erhöht wird.

Um eine hohe Stabilität der Verbindung zu erzeugen, erstreckt sich die Ausnehmung zur Aufnahme des Steckteils auf der Rückseite der Trägerplatte über beide Plattenschichten. Wird nun ein Steckteil, bevorzugt aus einem harten Material in die Ausnehmung gesteckt, wird das Steckteil nicht nur von dem weichen Material der zweiten Plattenschicht gehalten, sondern ebenso von der harten ersten Plattenschicht, wodurch sich vorteilhafterweise eine größere Stabilität der Verbindung, insbesondere bezüglich vorhandener Zugkräfte, erhöht.

Ferner ist das Steckteil bevorzugt mit Mitteln zum Aufhängen der Trägerplatte versehen, wobei es sich bei diesen Mitteln zum Aufhängen beispielsweise um ein Loch, insbesondere ein Langloch, handeln kann. Dadurch lässt sich die Trägerplatte vorteilhaft mittels eines Nagels oder Hakens an einer Wand befestigen.

Alternativ zu einem Loch zum Aufhängen der Trägerplatte an einem Nagel oder Haken ist die der geraden Längsseite des Steckteils gegenüberliegende Längsseite des Steckteils derart angeformt, um an einem Nagel oder Haken zu halten. Dies kann beispielsweise durch eine gebogene oder dreieckige Einbuchtung in der Steckteilseite erzeugt werden, bei dem die Position des Nagels an dem Steckteil automatisch zentriert wird. Das Steckteil kann zusätzlich mit einer Vertiefung auf der Rückseite im Bereich der Einbuchtung ausgestaltet sein, so dass ein Nagel oder Haken zum Aufhängen der Trägerplatte unter diese Einbuchtung greifen kann. Im Bereich dieser Vertiefung weist das Steckteil eine geringere Materialdicke auf. Vorteilhaft dient die Einbuchtung auch zum leichten Herausnehmen des Steckteils aus der Ausnehmung auf der Rückseite der Trägerplatte, wodurch vorteilhaft eine Verbindung der Trägerplatten ohne Werkzeug möglich ist.

Gemäß einer weiteren bevorzugten Ausführungsform der Erfindung weist das Steckteil auf der Unterseite mindestens zwei Vorsprünge bzw. Anformungen auf, welche lediglich im herausgenommenen Zustand auf der Rückseite des Steckteils sichtbar sind. Diese Vorsprünge sorgen vorteilhaft für eine bessere Stabilität der Verbindung zwischen den Trägerplatten. Dazu greifen die Vorsprünge in jeweils ein entsprechendes Loch bzw. Vertiefung innerhalb der Ausnehmung auf der Rückseite der Trägerplatte. Um die Stabilität der Verbindung weiter zu erhöhen, können die Vorsprünge konisch geformt sein, so dass zusätzlich zur vorhandenen formschlüssigen Verbindung beim Einstecken der Vorsprünge in die Vertiefung vorteilhaft zusätzlich eine kraftschlüssige Verbindung entsteht.

Gemäß einer alternativen Ausführungsform der Erfindung sind die Verbindungselemente einer Trägerplatte als identisch ausgebildete Schiebeteile zum Herstellen einer Schiebeverbindung zwischen zwei Trägerplatten ausgebildet. Mit derartig ausgebildeten Schiebeteilen lassen sich die Trägerplatten vorteilhaft abstandslos verbinden.

Dadurch, dass die Schiebeteile identisch ausgebildet sind, lassen sie sich in jede Ausnehmung auf der Rückseite der Trägerplatte stecken, so dass vorteilhaft die Trägerplatten beliebig an jeder Trägerplattenkante verbindbar sind, um eine individuelle Fläche zu erzeugen.

Gemäß einer weiteren bevorzugten Ausführungsform der Erfindung sind die Schiebeteile derart symmetrisch ausgestaltet, dass zwei zusammengelegte Schiebeteile um 90° gedreht in eine entsprechende Ausnehmung auf der Rückseite der zu verbindenden Trägerplatten einschiebbar sind.

Dabei sind die Schiebeteile bevorzugt rechteckig ausgebildet, wobei die lange Seite des Schiebeteils doppelt so lang wie die kurze Seite des Schiebeteils ausgebildet ist. Durch eine derartige Ausgestaltung bilden zwei zusammengelegte Schiebeteile eine quadratische Form, die vorteilhaft passgenau in zwei zusammengelegte Ausnehmungen zweier zu verbindender Trägerplatten eingeschoben werden kann, wodurch eine im wesentlichen formschlüssige Verbindung zwischen den Trägerplatten entsteht.

In einer weiteren bevorzugten Ausführungsform der Erfindung weisen die Schiebeteile eine an drei Seiten verlaufende Nut auf, wobei eine lange Seite des Schiebeteils ohne Nut versehen ist, damit diese Seite des Schiebeteils bei Nichtgebrauch bündig mit der Trägerplattenkante abschließt.

Ferner ist die zugehörige Ausnehmung auf der Rückseite der Trägerplatte mit einer an drei Seiten verlaufenden Feder versehen, so dass das in die Ausnehmung eingeschobene Schiebeteil eine Nut-Feder-Verbindung mit der Trägerplatte eingeht.

Zum Verbinden von zwei Trägerplatten werden zwei Schiebeteile an der langen Seite ohne Nut zusammengelegt und um 90° gedreht in einer Ausnehmung einer ersten Trägerplatte geschoben. Da die eine lange Seite des Schiebeteils keine Nut aufweist, ist die Feder an der langen Seite innerhalb der Ausnehmung auf der Rückseite der Trägerplatte unterbrochen, so dass die zusammengelegten und um 90° gedrehten Schiebeteile passgenau in die Ausnehmung der Trägerplatte geschoben werden können.

Zum Verbinden von zwei Trägerplatten wird nun die zweite Trägerplatte mit der freien Ausnehmung auf der Rückseite auf die überstehenden Schiebeteile geschoben.

Ferner ist mittig im Schiebeteil ein Langloch vorgesehen, während die Ausnehmung auf der Rückseite der Trägerplatte mit zwei Anformungen versehen ist. Dabei ist das Langloch derart dimensioniert, dass sich im in die Ausnehmung eingeschobenen Zustand an der schmalen Seite des Langlochs jeweils eine Anformung innerhalb des Langlochs befindet.

Dabei sind die Anformungen und das Langloch derart symmetrisch angeordnet, dass sich die Anformungen auch im verbundenen Zustand, d.h. um 90° gedreht, an den schmalen Seiten innerhalb des Langlochs befinden. Dadurch erhält das Schiebeteil ausreichend Festigkeit in der Ausnehmung der Trägerplatte, um die Trägerplatte aufzuhängen.

Bevorzugt weisen die Anformungen abgeflachte Kanten auf, um ein Rüberschieben des Schiebeteils zu erleichtern. Durch die Anformungen liegt neben einer formschlüssigen Verbindung auch eine kraft- bzw. reibschlüssige Verbindung vor, so dass die Verbindung vorteilhafterweise einen besseren Halt aufweist und mittels des Langlochs in dem Schiebeteil an einem Nagel oder Haken aufgehängt werden kann.

Gemäß einer alternativen Ausführungsform der Erfindung sind die Verbindungselemente als identisch ausgebildete Drehteile zum Herstellen einer Klemmverbindung zwischen zwei Trägerplatten vorgesehen. Dadurch ist vorteilhaft eine abstandslose Verbindung zwischen zwei Trägerplatten möglich.

Dadurch, dass die Drehteile identisch ausgebildet sind, lassen sich die Trägerplatten beliebig an jeder Trägerplattenkante mit einer weiteren Trägerplatte verbinden, um eine individuelle Fläche zu erzeugen.

In einer weiteren bevorzugten Ausführungsform der Erfindung ist das Drehteil als ein in einer Führungsnut, insbesondere eine halbkreisförmig verlaufende Führungsnut, in der Rückseite der Trägerplatte drehbar bzw. verschiebbar gelagerter Teil einer Kreisringscheibe ausgestaltet.

Eine derartige Ausgestaltung der Verbindungsteile als Drehteile hat den Vorteil, dass keine Verbindungselemente verlorengehen können, da diese fest in die Rückseite der Trägerplatte integriert sind.

Um zwei Trägerplatten mittels der Drehteile zu verbinden, werden diese derart aneinandergelegt, dass sich die Führungsnuten von jeweils einem Drehteil gegenüberliegen. Durch gleichzeitiges Drehen der sich gegenüberliegenden Kreisringscheibenteile der zwei Drehteile der zu verbindenden Trägerplatten werden die Kreisringscheibenteile über den jeweiligen Rand der Trägerplatte hinausgeschoben, wodurch auf jeder Trägerplatte ein Teil der jeweiligen Führungsnut freigelegt wird.

Gleichzeitig werden die Kreisringscheibenteile in die nun freistehende jeweils gegenüberliegende Führungsnut geschoben, wodurch eine schnelle, formschlüssige Verbindung zwischen den Trägerplatten hergestellt wird, die genauso schnell wieder geöffnet werden kann.

Bevorzugt sind die Kreisringscheibenteile im Wesentlichen halbkreisförmig ausgestaltet, sie können jedoch jedweden Anteil einer Kreisringscheibe annehmen, welcher geeignet ist, um eine sichere und feste Verbindung zwischen zwei Trägerplatten herzustellen.

In einer weiteren bevorzugten Ausführungsform der Erfindung weist der Teil der Kreisringscheibe bzw. das Kreisringscheibenteil des Drehteils einen Führungsteil auf, welcher auf der Oberseite des Kreisringscheibenteils angeordnet ist und bevorzugt bündig mit der Rückseite der Trägerplatte abschließt. Dieses Führungsteil ist in einem im Wesentlichen halbkreisförmigen Führungsausschnitt in der Rückseite der Trägerplatte verschiebbar angeordnet. Das Führungsteil erleichtert vorteilhaft die Drehbewegung des Drehteils und gibt das Maß der Drehbewegung vor, indem das Führungsteil in dem Führungsausschnitt von einem Anschlag zum anderen Anschlag bewegt wird.

Ferner weist das Führungsteil einen Fingereinlass auf, welcher vorteilhaft die Drehbewegung des Drehteils erleichtert, indem ein Finger in die Vertiefung eingreifen kann.

Bevorzugt wird eine Drehbewegung der Kreisringscheibenteile von im Wesentlichen 90° vorgesehen. Die Erfindung ist jedoch nicht auf eine 90°-Drehung beschränkt. Vielmehr ist jedwede Drehbewegung denkbar, die eine feste Verbindung zwischen den Trägerplatten ermöglicht.

Die Verwendung von Drehteilen als Verbindungselemente erzeugen vorteilhaft eine besonders stabile Verbindung zuwischen den Trägerplatten, da sich die Trägerplatte weder durch Zugkräfte noch durch Druck- oder Scherkräfte gegeneinander lösen lassen.

O.g. Aufgabe wird ferner durch einen Trägerplattenverbund aus mindestens zwei erfindungsgemäßen Trägerplatten gelöst.

Dazu werden die Trägerplatten lösbar mittels mindestens zwei identisch ausgebildeten Verbindungselementen abstandslos zu einem Trägerplattenverbund verbunden bzw. zusammengefasst. Dabei kann die Verbindung vorteilhaft zu allen Trägerplattenseiten hin beliebig fortgesetzt werden, um eine individuelle Wandgestaltung zu erzeugen.

Zum Verbinden von zwei Trägerplatten wird jede Verbindungsstelle durch zwei identisch ausgebildete Verbindungselemente gebildet, wobei jede Trägerplatte je ein Verbindungselement pro Verbindungsstelle bereitstellt.

Ein besonderer Vorteil der Erfindung besteht darin, dass einzelne Trägerplatten ohne großen Aufwand aus einem bestehenden Trägerplattenverbund entfernt werden bzw. ausgetauscht werden können.

O.g. Aufgabe wird ferner durch ein Trägerplattensystem mit mindestens einer Trägerplatte gelöst. Dazu weist das Trägerplattensystem mindestens eine Trägerplatte und eine Befestigungsschiene auf, auf der zwei, drei oder mehr Systemverbindungselemente, insbesondere Systemsteckteile, zur Montage von mindestens einer Trägerplatte befestigt sind.

Das Trägerplattensystem hat den Vorteil, dass eine fest, z.B. an einer Wand, montierte Befestigungsschiene besonders einfach mit immer wieder wechselnden Trägerplatten bestückt werden kann.

Ferner weist die Befestigungsschiene zwei, drei oder mehr, insbesondere identisch ausgebildete, Systemverbindungselemente auf, die fest oder lösbar mit der Befestigungsschiene verbunden sind.

Die Systemverbindungselemente sind erfindungsgemäß derart ausgestaltet, um zur Hälfte von einer Ausnehmung auf der Rückseite der Trägerplatte passgenau aufgenommen zu werden. Dabei entspricht ein Systemverbindungselement gleich zwei zusammengelegten Steckteilen. Dadurch lassen sich zwei oder mehr Trägerplatten abstandslos an der Befestigungsschiene anordnen, indem jeweils ein Systemverbindungselement in jeweils eine Ausnehmung von zwei angrenzenden Trägerplatten gesteckt wird.

Die Abstände zwischen den Systemverbindungselementen sind in Abhängigkeit der zu befestigenden Trägerplatten gewählt.

Schließlich löst die Erfindung o.g. Aufgabe mit einem Verfahren zum Verbinden von mindestens zwei erfindungsgemäßen Trägerplatten bzw. mit einem Verfahren zum Herstellen eines erfindungsgemäßen Trägerplattenverbundes, wobei jede Verbindung durch zwei identisch ausgebildete Verbindungselemente gebildet wird.

Je nach Anforderung kann mittels der identisch ausgebildeten Verbindungselemente eine lösbare Verbindung zwischen mindestens zwei Trägerplatten hergestellt werden, wobei die für die Verbindung benötigten Verbindungselemente in der Rückseite der zu verbindenden Trägerplatten integriert sind. Dadurch ist vorteilhaft eine Verbindung von Trägerplatten ohne Werkzeug oder sonstige Hilfsmittel und Zusatzteile möglich, die sich sowohl an einer vertikalen Fläche, insbesondere Wand, befestigen oder aufhängen lässt oder auf einer horizontalen Fläche, insbesondere Schreibtisch, Regal etc., aufstellen lässt.

Weitere Ausführungsformen der Erfindung ergeben sich aus den Ansprüchen sowie aus den anhand der Zeichnung näher erläuterten Ausführungsbeispielen. In der Zeichnung zeigen:
- Fig.1: eine perspektivische Darstellung einer Trägerplatte mit schematisch angedeuteten Verbindungselementen,
- Fig. 2: eine perspektivische Darstellung von zwei Trägerplatten mit Steckteilen zum Herstellen einer Steckverbindung,
- Fig. 3: eine perspektivische Darstellung von zwei Trägerplatten mit Schiebeteilen zur Herstellung einer Schiebeverbindung,
- Fig. 4: eine perspektivische Darstellung von zwei Trägerplatten mit Drehteilen zur Herstellung einer Klemmverbindung,
- Fig. 5: eine perspektivische Darstellung eines Trägerplattenverbundes,
- Fig. 6: eine perspektivische Darstellung eines Trägerplattensystems mit Befestigungsschiene und vertikal montierter Trägerplatte und
- Fig. 7: eine perspektivische Darstellung eines Trägerplattensystems mit Befestigungsschiene und horizontal montierter Trägerplatte.

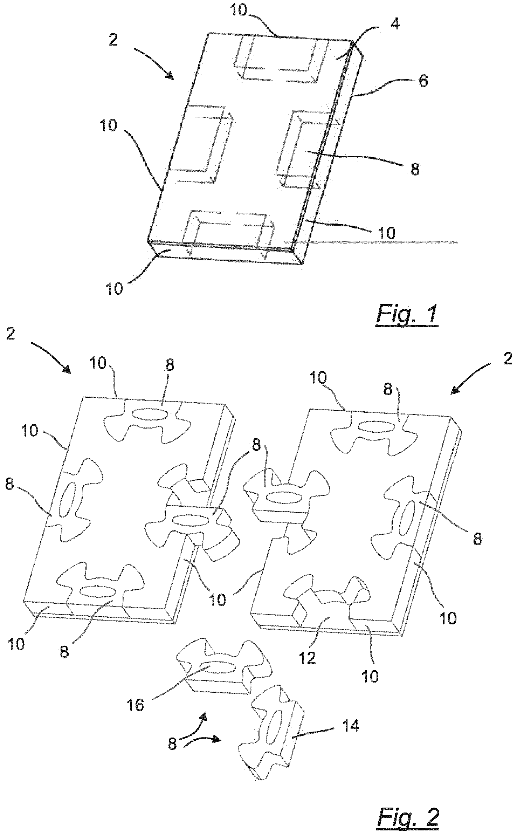

Fig. 1 zeigt eine perspektivische Darstellung einer erfindungsgemäßen, als Wandschmuckträgerplatte vorgesehenen Trägerplatte 2 mit einer Nutzfläche 4 und einer Rückseite 6. Die in Fig. 1 gezeigte Trägerplatte 2 ist rechteckig ausgebildet. Die Erfindung ist jedoch nicht auf eine rechteckige Form der Trägerplatte 2 beschränkt. Vielmehr sind jedwede symmetrische Formen denkbar, die zu einer Fläche abstandslos aneinandergefügt werden können, wie z.B. eine sechseckige oder dreieckige Form.

Auf der Rückseite 6 der Trägerplatte 2 sind schematisch angedeutete Verbindungselemente 8 angeordnet, wobei sich mindestens ein Verbindungselement 8 an jeweils einer Trägerplattenkante 10 befindet.

Durch ein geeignetes Spritzgussverfahren lässt sich die Trägerplatte 2 vorteilhaft kostengünstig in hoher Stückzahl als Kunststoffteil herstellen. Alternativ ist die Herstellung der Trägerplatte 2 aus vernetztem Polyethylen-Schaum oder Zellkautschuk denkbar, wobei die Härte und Zellstruktur je nach Typ und Schäumungsgrad wählbar sind. Das hat den Vorteil, dass die Trägerplatte besonders leicht ist. Eine Herstellung der Trägerplatte aus Holz oder Metall durch Fräsen, Stanzen oder andersartig formgebend ist jedoch ebenso denkbar, wie auch eine Kombination unterschiedlicher Materialien untereinander.

Zum Anbringen eines Präsentationsobjektes kann die Nutzfläche 4 der Trägerplatte 2 mit einer Klebeschicht versehen sein. Das Präsentationsobjekt kann jedoch auch mittels Nieten oder Schrauben befestigt sein. Ferner können 3D-Präsentationen durch Tiefziehen auch direht in die Nutzfläche eingebracht werden.

Fig. 2 zeigt eine perspektivische Darstellung von zwei Trägerplatten 2 mit Verbindungselementen 8, die als puzzleförmige Steckteile 8 ausgebildet sind.

Die Steckteile 8 sind an allen Trägerplattenkanten 10 angeordnet und derart ausgestaltet, dass sie passgenau in eine Ausnehmung 12 auf der Rückseite 6 der Trägerplatte 2 steckbar sind.

Ferner weisen die Steckteile 8 eine erste Längsseite 14 auf, welche gerade ausgebildet ist, um mit der Trägerplattenkante 10 bündig abzuschließen, wenn das Steckteil 8 sich bei Nichtgebrauch in der Ausnehmung 12 befindet.

Zum Herstellen einer lösbaren Steckverbindung zwischen zwei Trägerplatten 2 werden an den Trägerplattenkanten, welche zusammengefügt werden sollen, die Steckteile 8 hinausgenommen, die Trägerplatte 2 mit den Ausnehmungen 12 aneinandergelegt, die Steckteile 8 an ihrer geraden Längsseite 14 zusammengelegt und um 90° gedreht wieder in die Ausnehmung 12 gesteckt.

Die symmetrische, puzzleförmige Ausgestaltung der Steckteile 8 sorgt vorteilhaft für eine feste formschlüssige Verbindung zwischen den Trägerplatten 2.

Bevorzugt weisen die Steckteile 8 Mittel zum Aufhängen 16 auf, insbesondere ein mittig angeordnetes Langloch, wodurch die Trägerplatte 2 an einem Nagel oder Haken an einer Wand oder einer anderen vertikalen Stellfläche befestigbar ist. Ferner dient das Langloch 16 im Steckteil 8 zum leichten Eingriff, um das Steckteil 8 einfach aus der Ausnehmung 12 zu nehmen.

Um eine einheitliche Oberfläche auf der Rückseite 6 der Trägerplatte 2 zu erhalten, schließen die Steckteile 8 in der Ausnehmung 12 bevorzugt bündig mit der Oberfläche der Rückseite 6 der Trägerplatte 2 ab.

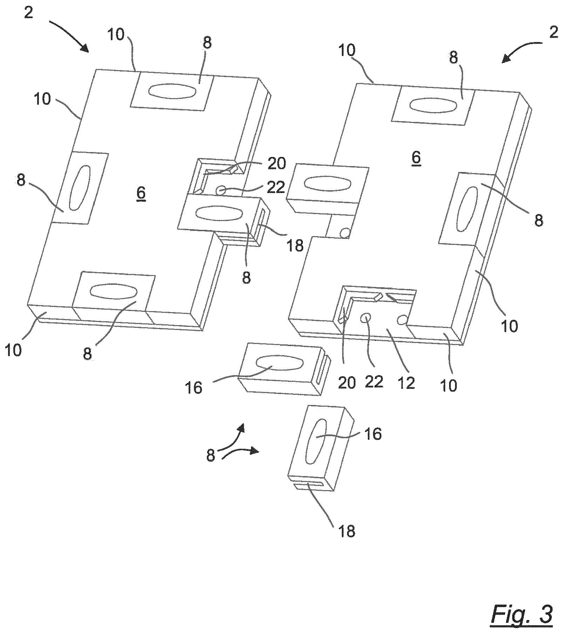

Fig. 3 zeigt eine perspektivische Darstellung von zwei Trägerplatten 2 mit Verbindungselementen 8, die als rechteckige Schiebeteile 8 ausgebildet sind. Die Schiebeteile 8 sind ebenfalls an allen Trägerplattenkanten 10 angeordnet, so dass ein Verbinden der Trägerplatte 2 zu allen Seiten hin möglich ist.

Die Schiebeteile 8 sind bevorzugt rechteckig ausgebildet, wobei die lange Seite des Schiebeteils 8 doppelt so lang ist, wie die kurze Seite des Schiebeteils 8. Zwei zusammengelegte Schiebeteile 8 bilden somit ein Quadrat, welches passgenau in zwei zusammengelegte Ausnehmungen 12 von angrenzenden Trägerplatten 2 passt.

Wie auch bei den unter Fig. 2 gezeigten Steckteilen 8 weisen die Schiebeteile 8 Mittel zum Aufhängen 16 der Trägerplatte 2 auf, insbesondere ein Langloch 16, wodurch die Trägerplatte 2 an einem Nagel oder Haken an einer Wand oder einer anderen vertikalen Stellfläche befestigbar ist. Ferner dient das Langloch 16 im Schiebeteil 8 zum leichten Eingriff, um das Schiebeteil 8 einfach aus der Ausnehmung 12 zu schieben.

Ferner weist das Schiebeteil 8 eine an drei Seiten verlaufende Nut 18 auf, welche auf eine zugehörige Feder in der Ausnehmung 12 auf der Rückseite 6 der Trägerplatte 2 geschoben werden kann. Dies gilt sowohl für die Aufbewahrung bei Nichtgebrauch als auch für eine Verbindung von zwei Trägerplatten 2 bei der zwei aneinandergelegte Schiebeteile 8 in eine Ausnehmung 12 geschoben werden und die zu verbindende zweite Trägerplatte 2 mit der angrenzenden Ausnehmung 12 auf die aneinandergelegten Schiebeteile 8 geschoben wird.

Damit die Schiebeteile 8 bei Nichtgebrauch bündig mit der Trägerplattenkante 10 abschließen, weisen diese eine Kante ohne Nut auf. Zum Verbinden der Trägerplatten 2 muss darauf geachtet werden, dass die zusammengelegten Schiebeteile 8 mit der Seite ohne Nut 18 zusammengelegt werden. Um diese dann ganz in die Ausnehmung 12 schieben zu können, ist die Feder 20 an der langen Seite der Ausnehmung 12 in der Mitte unterbrochen.

Schließlich sind in der Ausnehmung 12 auf der Rückseite 6 der Trägerplatte 2 zwei Anformungen 22 oder Nasen 22 angeordnet, deren Kanten bevorzugt abgeflacht sind, damit das Schiebeteil 8 über die Anformungen 22 geschoben werden kann.

Um einen festen Halt des Schiebeteils 8 in der Ausnehmung 12 zu erzielen, rasten die Anformungen 22 in die schmale Seite des Langlochs ein. Dies geschieht sowohl im eingeschobenen Zustand bei Nichtgebrauch des Schiebeteils 8 als auch im Verbindungszustand, wenn das Schiebeteil 8 und 90° gedreht ist.

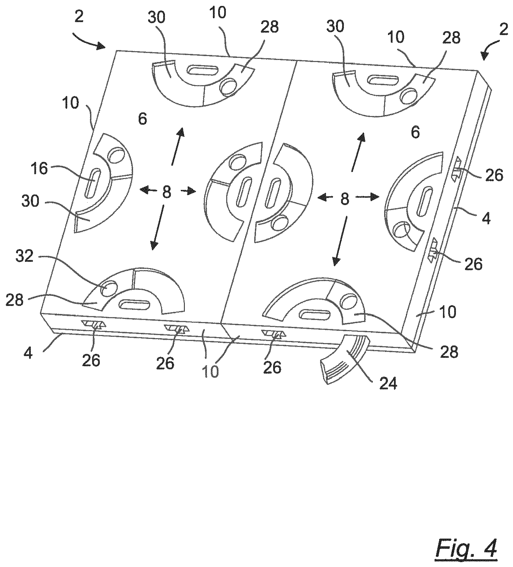

Fig. 4 zeigt eine perspektivische Darstellung von zwei Trägerplatten 2 mit Verbindungselementen 8, die als Drehteile 8 ausgebildet sind. Die Drehteile 8 sind an allen Trägerplattenkanten 10 angeordnet, um ein Verbinden der Trägerplatten 2 zu allen Seiten hin zu ermöglichen.

Zum Aufhängen der Trägerplatte 2, z.B. an einer Wand oder einer anderen vertikalen Stellfläche, sind zu allen Trägerplattenkanten 10 hin kleine Ausnehmungen 16 vorgesehen.

Um eine Klemmverbindung zwischen zwei Trägerplatten 2 herzustellen, weist das Drehteil 8 einen Teil einer Kreisringscheibe 24 auf, welcher derart ausgebildet ist, um eine feste Verbindung zwischen den Trägerplatten 2 zu erzeugen, insbesondere jedoch bevorzugt halbkreisförmig. Dieser Teil einer Kreisringscheibe 24 bzw. dieser Kreisringscheibenteil 24 ist in einer Führungsnut 26 drehbar bzw. verschiebbar gelagert.

Zum Verbinden der Trägerplatten 2 werden diese derart zusammengelegt, dass zwei Drehteile 8 sich gegenüberliegen. Ein gleichzeitiges Drehen bzw. Verschieben des jeweiligen Kreisringscheibenteils 24 der Drehteile 8 führt den Kreisringscheibenteil 24 aus der Trägerplattenkante 10 hinaus in die gegenüberliegende Trägerplatte 2 hinein.

Zum einfachen Verschieben des Kreisringscheibenteils 24 ist auf dem Kreisringscheibenteil 24 ein Führungsteil 28 befestigt, welches in einem Führungsausschnitt 30 verschiebbar angeordnet ist. Durch das Führungsteil 28 wird das Maß der Drehbewegung vorgegeben, indem das Führungsteil 28 von einem Anschlag zum anderen Anschlag bewegt werden kann.

Durch Drehung der sich gegenüberliegenden Kreisringscheibenteile 24 werden diese in die jeweils gegenüberliegende Führungsnut 26 eingeführt, wodurch eine Klemmverbindung zwischen den Trägerplatten 2 entsteht. Bevorzugt wird eine im Wesentlichen 90°-Drehung der Kreisringscheibenteile 24 vorgenommen. Es ist jedoch alternativ jedwede Drehbewegung denkbar, die eine feste Verbindung zwischen den Trägerplatten 2 erzeugt.

Zum Erleichtern der Drehbewegung weist das Führungsteil 28 einen Fingereinlass 32 auf, wodurch eine Drehung des Führungsteils 28 von Anschlag zu Anschlag ohne zusätzliches Werkzeug möglich ist.

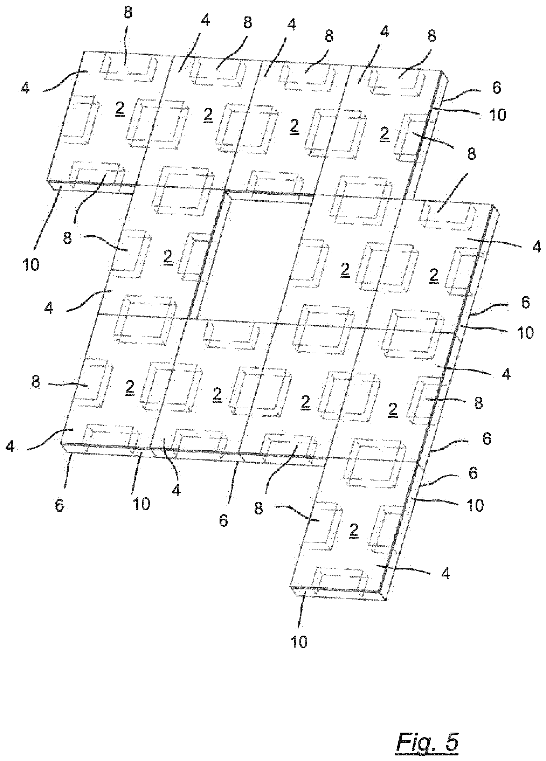

Fig. 5 zeigt eine perspektivische Darstellung eines Trägerplattenverbundes 34 aus mehreren Trägerplatten 2 gemäß einer der vorstehenden Ausführungsformen. In Fig. 5 sind auch wie in Fig. 1 die Verbindungselemente 8 schematisch angedeutet, um zu verdeutlichen, dass zur Herstellung eines erfindungsgemäßen Trägerplattenverbundes 34 jedwede Art der vorstehend ausgeführten Verbindungselemente 8 anwendbar ist. Dabei ist jedoch zu beachten, dass die verschiedenen Ausführungen der Verbindungselemente 8 (Steck-, Schiebe- oder Drehteil) nicht miteinander kombinierbar sind. Ein Trägerplattenverbund 34 weist stets identisch ausgebildete Verbindungselemente 8 auf.

Durch die erfindungsgemäße Trägerplatte 2 ist eine individuelle Gestaltungsmöglichkeit für den Trägerplattenverbund 34 gegeben, da die Trägerplatten 2 an jeder Seite beliebig oft verbunden werden können.

Gleichzeitig ist eine kurzfristige Umgestaltung des Trägerplattenverbundes 34 durch die einfache und schnelle Verbindungsmöglichkeit mittels der in die Trägerplatte 2 integrierten Verbindungselemente vorteilhaft ohne Werkzeug und zusätzlicher Teile möglich. Im Falle einer Klemm- oder Steckverbindung mittels Drehteilen oder Steckteilen ist sogar ein Austausch einzelner Trägerplatten 2 möglich ohne den Trägerplattenverbund 34 aufzulösen.

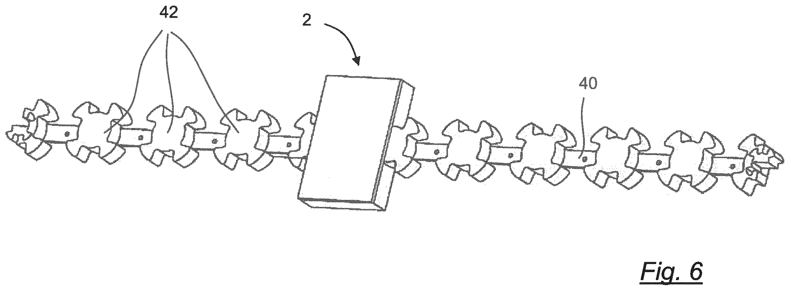

Fig. 6 zeigt eine perspektivische Darstellung eines Trägerplattensystems, bei dem auf einer Befestigungsschiene 40 eine vertikale, bzw. im Hochformat ausgerichtete Trägerplatte 2 montiert ist. Zur Montage der Trägerplatte 2 weist die Befestigungsschiene 40 eine Mehrzahl Systemverbindungselemente 42 auf, welche in regelmäßigen Abstand zueinander angeordnet sind.

Die Systemverbindungselemente 42 entsprechen in ihrer Ausgestaltung zwei zusammengelegten Steckteilen 8 und passen daher genau in jeweils eine Ausnehmung auf der Rückseite von zwei aneinander gelegten Trägerplatten 2.

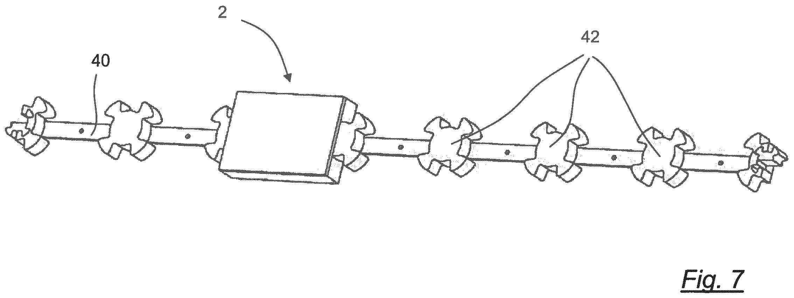

Fig. 7 zeigt eine perspektivische Darstellung eines Trägerplattensystems, bei dem auf einer Befestigungsschiene 40 eine horizontale, bzw. im Querformat ausgerichtete Trägerplatte 2 montiert ist. Auch hier sind die Systemverbindungselemente 42 gleichmäßig beabstandet angeordnet, wobei der Abstand der Systemverbindungselemente 42 abhängig ist von den Maßen der an der Befestigungsschiene 40 zu befestigenden Trägerplatte 2.

Die Befestigungsschiene 40 des erfindungsgemäßen Trägerplattensystems wird beispielsweise an einer Wand befestigt und die gewünschten Trägerplatten 2 aufgesteckt. Ein derartiges Trägerplattensystem weist den Vorteil auf, dass das Design der Präsentation permanent variiert werden kann. Somit ist vorteilhafterweise ein schneller, einfacher und häufiger Wechsel der Trägerplatten 2 möglich.

Sämtliche in der vorstehenden Beschreibung sowie in den Ansprüchen genannten Merkmale sind sowohl einzeln als auch in beliebiger Kombination mit den Merkmalen der unabhängigen Ansprüche kombinierbar. Die Offenbarung der Erfindung ist daher nicht auf die beschriebenen bzw. beanspruchten Merkmalskombinationen beschränkt. Vielmehr sind alle im Rahmen der Erfindung sinnvollen Merkmalskombinationen als offenbart zu betrachten.

## Patentansprüche

1. Trägerplatte zur Aufnahme eines Präsentationsobjektes, wobei die Trägerplatte (2) eine Nutzfläche (4) zur Anbringung des Präsentationsobjektes und eine Rückseite (6) zur Anbringung von Verbindungselementen (8) aufweist und wobei mit mindestens einem Verbindungselement (8) je Trägerplatte (2) eine lösbare Verbindung zwischen mindestens zwei Trägerplatten (2) herstellbar ist,
**dadurch gekennzeichnet, dass**
an jeder Trägerplattenkante (10) mindestens ein Verbindungselement (8) angeordnet ist, wobei die Verbindungselemente (8) in die Rückseite (6) der Trägerplatte (2) integriert sind und zwar derart integriert sind, dass sie, falls die Verbindungselemente (8) keine Verbindung mit einer weiteren Trägerplatte (2) eingehen, von der Nutzfläche (4) aus nicht sichtbar sind, die Verbindungselemente (8) derart ausgestaltet sind, um zwei oder mehr Trägerplatten (2) mit jeweils in gleiche Richtung weisende Nutzfläche (4) abstandslos angrenzend mit sich berührenden Trägerplattenkanten zu verbinden und
die Verbindungselemente (8) für den Fall, dass sie keine Verbindung mit einer weiteren Trägerplatte (2) eingehen, mit der jeweiligen angrenzenden Trägerplattenkante (10) bündig abschließen.

2. Trägerplatte nach Anspruch 1,
**gekennzeichnet durch**
eine Ausgestaltung der Verbindungselemente (8) als identisch ausgebildete Steckteile zum Herstellen einer Steckverbindung zwischen zwei Trägerplatten (2), um diese abstandslos zu verbinden.

3. Trägerplatte nach Anspruch 2,
**gekennzeichnet durch**
eine symmetrische Ausgestaltung der Steckteile derart puzzleförmig, dass zwei zusammengelegte Steckteile um 90° gedreht in eine entsprechende Ausnehmung (12) auf jeweils einer Rückseite (6) der zu verbindenden Trägerplatten (2) einsteckbar sind.

4. Trägerplatte nach Anspruch 2 oder 3,
**dadurch gekennzeichnet, dass**
eine Längsseite (14) des Steckteils gerade ausgebildet ist, um bei Nichtgebrauch und bei Aufnahme in einer Ausnehmung (12) auf der Rückseite (6) der Trägerplatte (2) bündig mit der Trägerplattenkante (10) abzuschließen und das Steckteil mit Mitteln zum Aufhängen (16) versehen ist, um die Trägerplatte (2) mittels eines Nagels oder Hakens an einer Wand zu befestigen.

5. Trägerplatte nach Anspruch 2 bis 4,
**dadurch gekennzeichnet, dass**
das Steckteil auf der Unterseite mindestens zwei Nasen bzw. Anformungen aufweist, welche in jeweils eine entsprechende Vertiefung bzw. Ausnehmung auf der Trägerplattenrückseite greifen.

6. Trägerplatte nach Anspruch 1,
**gekennzeichnet durch**
eine Ausgestaltung der Verbindungselemente (8) als identisch ausgebildete Schiebeteile zum Herstellen einer Schiebeverbindung zwischen zwei Trägerplatten (2), um diese abstandslos zu verbinden.

7. Trägerplatte nach Anspruch 6,
**gekennzeichnet durch**
eine Ausgestaltung der Schiebeteile derart, dass zwei zusammengelegte Schiebeteile um 90° gedreht in eine entsprechende Ausnehmung (12) auf jeweils einer Rückseite (6) der zu verbindenden Trägerplatten (2) einschiebbar sind.

8. Trägerplatte nach Anspruch 6 oder 7,
**dadurch gekennzeichnet, dass**
die Schiebeteile eine an drei Seiten verlaufende Nut (18) aufweisen und eine Ausnehmung (12) auf der Rückseite (6) der Trägerplatte (2) eine Feder (20) aufweist und das in die Ausnehmung (12) eingeschobene Schiebeteil eine Nut-Feder-Verbindung mit der Trägerplatte (2) eingeht und/oder
das Schiebeteil als Mittel zum Aufhängen (16) mittig ein Langloch aufweist und eine Ausnehmung (12) auf der Rückseite (6) der Trägerplatte (2) zwei Anformungen (22) aufweist, wobei das Langloch (16) derart dimensioniert ist, dass sich beim in die Ausnehmung (12) eingeschobenen Zustand an den schmalen Seiten des Langlochs (16) jeweils eine Anformung (22) in dem Langloch (16) befindet.

9. Trägerplatte nach Anspruch 1,
**gekennzeichnet durch**
eine Ausgestaltung der Verbindungselemente (8) als identisch ausgebildete Drehteile zum Herstellen einer Klemmverbindung zwischen zwei Trägerplatten (2), um diese abstandslos zu verbinden.

10. Trägerplatte nach Anspruch 9,
**gekennzeichnet durch**
eine Ausgestaltung des Drehteils als ein in einer Führungsnut (26) in der Rückseite (6) der Trägerplatte (2) drehbar bzw. verschiebbar gelagertes Teil einer Kreisringscheibe (24) oder
eine Ausgestaltung des Drehteils als ein in einer Führungsnut (26) in der Rückseite (6) der Trägerplatte (2) drehbar bzw. verschiebbar gelagertes Teil einer Kreisringscheibe (24), wobei der Teil der Kreisringscheibe (24) des Drehteils ein Führungsteil (28) aufweist, welches in einem Führungsausschnitt (30) in der Rückseite (6) der Trägerplatte (2) verschiebbar angeordnet ist und das Führungsteil (28) einen Fingereinlass (32) aufweist.

11. Trägerplattenverbund aus mindestens zwei Trägerplatten (2) nach einem der Ansprüche 1 bis 10,
wobei die Trägerplatten (2) lösbar mittels mindestens zwei identisch ausgebildeten Verbindungselementen (8) abstandslos zu einem Trägerplattenverbund (34) verbunden sind und
die Trägerplatten (2) gleiche oder verschiedene Größen aufweisen, wobei im Falle von verschieden großen Trägerplatten (2) die Trägerplatten derart dimensioniert sind, dass sie zu einem lückenlosen Trägerplattenverbund (34) verbindbar sind.

12. Trägerplattensystem mit mindestens einer Trägerplatte (2) zur Aufnahme eines Präsentationsobjektes, wobei die Trägerplatte (2) eine Nutzfläche (4) zur Anbringung des Präsentationsobjektes und eine Rückseite (6) zur Anbringung von Verbindungselementen (8) aufweist und wobei mit mindestens einem Verbindungselement (8) je Trägerplatte (2) eine lösbare Verbindung zwischen mindestens zwei Trägerplatten (2) herstellbar ist,
**dadurch gekennzeichnet, dass**
an jeder Trägerplattenkante (10) mindestens ein Verbindungselement (8) anordenbar ist, wobei die Verbindungselemente (8) in die Rückseite (6) der Trägerplatte (2) integrierbar sind und zwar derart integrierbar sind, dass sie, falls die Verbindungselemente (8) keine Verbindung mit einer weiteren Trägerplatte (2) eingehen, von der Nutzfläche (4) aus nicht sichtbar sind, die Verbindungselemente (8) derart ausgestaltet sind, um zwei oder mehr Trägerplatten (2) mit jeweils in gleiche Richtung weisender Nutzfläche (4) abstandslos angrenzend mit sich berührenden Trägerplattenkanten verbinden zu können, und
die integrierten Verbindungselemente (8) für den Fall, dass sie keine Verbindung mit einer weiteren Trägerplatte (2) eingehen, mit der jeweiligen angrenzenden Trägerplattenkante (10) bündig abschließen und
das Trägerplattensystem eine Befestigungsschiene (40) aufweist.
mit zwei, drei oder mehr identisch ausgebildeten Systemverbindungselementen (42), wobei die Systemverbindungselemente (42) derart ausgestaltet sind, um sich passgenau in jeweils eine Ausnehmung (12) auf der Rückseite (6) von zwei angrenzenden Trägerplatten (2) einzupassen und
mit Abständen zwischen den Systemverbindungselementen (42) in Abhängigkeit der zu befestigenden Trägerplatten (2).

13. Verfahren zum Verbinden von mindestens zwei Trägerplatten (2) nach einem der Ansprüche 1 bis 10 und zum Herstellen eines Trägerplattenverbundes (34) nach Anspruch 11,
wobei
mittels mindestens zwei identisch ausgebildeter Verbindungselemente (8) eine lösbare Verbindung zwischen zwei abstandslos angrenzende Trägerplatten (2) mit sich berührenden Trägerplattenkanten hergestellt wird und die für die Verbindung benötigten Verbindungselemente (8) in der Rückseite (6) der zu verbindenden Trägerplatten (2) integriert sind.

## Claims

1. A support plate for receiving a presentation object, wherein the support plate (2) has a useful surface (4) for attaching the presentation object and a rear side (6) for attaching connecting elements (8), and wherein a detachable connection between at least two support plates (2) can be produced with at least one connecting element (8) per support plate (2),
**characterised in that**
at least one connecting element (8) is arranged on each support-plate edge (10), the connecting elements (8) being integrated in the rear side (6) of the support plate (2), and namely integrated such that, if the connecting elements (8) do not enter into any connection with a further support plate (2), they are not visible from the useful surface (4),
the connecting elements (8) are configured so as to connect two or more support plates (2) with a useful surface (4) pointing in the same direction in each case in a manner adjoining without any spacing with touching support-plate edges, and
the connecting elements (8), in the event that they do not enter into any connection with a further support plate (2), terminate flush with the respective adjoining support-plate edge (10).

2. A support plate according to Claim 1,
**characterised by**
a configuration of the connecting elements (8) as identically designed plug-in parts for producing a plug-in connection between two support plates (2), in order to connect them without any spacing.

3. A support plate according to Claim 2,
**characterised by**
a symmetrical configuration of the plug-in parts in puzzle-like manner such that two plug-in parts placed together can be plugged, rotated by 90°, into a corresponding recess (12) on in each case one rear side (6) of the support plates (2) which are to be connected.

4. A support plate according to Claim 2 or 3,
**characterised in that**
one long side (14) of the plug-in part is designed to be straight, in order, when not in use and when received in a recess (12) on the rear side (6) of the support plate (2), to terminate flush with the support-plate edge (10), and the plug-in part is provided with means (16) for hanging, in order to fasten the support plate (2) to a wall by means of a nail or hook.

5. A support plate according to Claims 2 to 4,
**characterised in that**
the plug-in part has on its underside at least two noses or formed-on portions which grip in one corresponding depression or recess in each case on the rear side of the support plate.

6. A support plate according to Claim 1,
**characterised by**
a configuration of the connecting elements (8) as identically designed sliding parts for producing a sliding connection between two support plates (2), in order to connect them without any spacing.

7. A support plate according to Claim 6,
**characterised by**
a configuration of the sliding parts such that two sliding parts placed together can be pushed, rotated by 90°, into a corresponding recess (12) on in each case one rear side (6) of the support plates (2) which are to be connected.

8. A support plate according to Claim 6 or 7,
**characterised in that**
the sliding parts have a groove (18) which runs on three sides, and a recess (12) on the rear side (6) of the support plate (2) has a spring (20), and the sliding part pushed into the recess (12) enters into a tongue-and-groove connection with the support plate (2), and/or the sliding part centrally has an elongate hole as means (16) for hanging and a recess (12) on the rear side (6) of the support plate (2) has two formed-on portions (22), the elongate hole (16) being of such dimensions that in the state pushed into the recess (12) in each case a formed-on portion (22) is located in the elongate hole (16) on the narrow sides of the elongate hole (16).

9. A support plate according to Claim 1,
**characterised by**
a configuration of the connecting elements (8) as identically designed rotary parts for producing a clamping connection between two support plates (2), in order to connect them without any spacing.

10. A support plate according to Claim 9,
**characterised by**
a configuration of the rotary part as a part of a circular ring disc (24) mounted rotatably or displaceably in a guide groove (26) in the rear side (6) of the support plate (2), or
a configuration of the rotary part as a part of a circular ring disc (24) mounted rotatably or displaceably in a guide groove (26) in the rear side (6) of the support plate (2), the part of the circular ring disc (24) of the rotary part having a guide part (28) which is arranged displaceably in a guide cutout (30) in the rear side (6) of the support plate (2) and the guide part (28) having a finger opening (32).

11. A support-plate composite consisting of at least two support plates (2) according to one of Claims 1 to 10,
wherein the support plates (2) are connected detachably without any spacing to form a support-plate composite (34) by means of at least two identically designed connecting elements (8), and
the support plates (2) are of the same or different sizes, with in the case of support plates (2) of different sizes the support plates being of such dimensions that they can be connected to form a gap-free support-plate composite (34).

12. A support-plate system with at least one support plate (2) for receiving a presentation object, wherein the support plate (2) has a useful surface (4) for attaching the presentation object and a rear side (6) for attaching connecting elements (8), and wherein a detachable connection between at least two support plates (2) can be produced with at least one connecting element (8) per support plate (2),
**characterised in that**
at least one connecting element (8) can be arranged on each support-plate edge (10), the connecting elements (8) being able to be integrated in the rear side (6) of the support plate (2), and namely being able to be integrated such that, if the connecting elements (8) do not enter into any connection with a further support plate (2), they are not visible from the useful surface (4), the connecting elements (8) are configured so as to be able to connect two or more support plates (2) with a useful surface (4) pointing in the same direction in each case in a manner adjoining without any spacing with touching support-plate edges, and
the integrated connecting elements (8), in the event that they do not enter into any connection with a further support plate (2), terminate flush with the respective adjoining support-plate edge (10), and
the support-plate system has a fastening rail (40)
with two, three or more identically designed system connection elements (42), the system connection elements (42) being configured such as to be fitted with a precise fit into in each case a recess (12) on the rear side (6) of two adjoining support plates (2), and with distances between the system connection elements (42) dependent on the support plates (2) which are to be fastened.

13. A method for connecting at least two support plates (2) according to one of Claims 1 to 10 and for producing a support-plate composite (34) according to Claim 11, wherein
a detachable connection between two support plates (2) which adjoin without any spacing with touching support-plate edges is produced by means of at least two identically designed connecting elements (8), and the connecting elements (8) required for the connection are integrated in the rear side (6) of the support plates (2) which are to be connected.

## Revendications

1. Plaque support destinée à recevoir un objet exposé, ladite plaque support (2) présentant une surface utile (4) destinée à recevoir l'objet exposé et une face arrière (6) destinée à recevoir des éléments d'assemblage (8), et un assemblage détachable entre au moins deux plaques supports (2) pouvant être obtenu à l'aide d'au moins un élément d'assemblage (8) par plaque support (2),
**caractérisée en ce que**
sur chaque bord de plaque support (10) est agencé au moins un élément d'assemblage (8), les éléments d'assemblage (8) étant intégrés à la face arrière (6) de la plaque support (2), et ce de telle manière que, lorsque lesdits éléments d'assemblage (8) n'opèrent aucun assemblage avec une autre plaque support (2), ils ne sont pas visibles depuis la surface utile (4),
les éléments d'assemblage (8) sont conçus pour assembler deux plaques supports (2) ou plus dont les surfaces utiles (4) respectives sont orientées dans le même sens, de manière contigüe et sans jeu, avec les bords de plaque qui se touchent et
les éléments d'assemblage (8), lorsqu'ils n'opèrent aucun assemblage avec une autre plaque support (2), affleurent le bord de plaque support (10) respectivement adjacent.

2. Plaque support selon la revendication 1,
**caractérisée par**
une conception des éléments d'assemblage (8) sous la forme d'éléments à emboîter de forme identique pour opérer un assemblage par emboîtement entre deux plaques supports (2), afin de les assembler sans jeu.

3. Plaque support selon la revendication 2,
**caractérisée par**
une conception symétrique des éléments à emboîter à la manière d'un puzzle, de telle sorte que deux éléments à emboîter accolés peuvent, après pivotement de 90°, être emboîtés dans un évidement correspondant (12) ménagé sur la face arrière (6) de chacune des plaques supports (2) à assembler.

4. Plaque support selon la revendication 2 ou la revendication 3,
**caractérisée en ce que**,
un côté longitudinal (14) de l'élément à emboîter est conçu rectiligne pour affleurer le bord de plaque support (10) lorsque, en cas de non-utilisation de l'élément à emboîter, celui-ci est logé dans un évidement (12) ménagé sur la face arrière (6) de la plaque support (2) et **en ce que** l'élément à emboîter est doté de moyens de suspension (16) permettant de fixer la plaque support (2) à une paroi au moyen d'un clou ou d'un crochet.

5. Plaque support selon l'une quelconque des revendications 2 à 4,
**caractérisée en ce que**
l'élément à emboîter présente, sur sa face inférieure, au moins deux doigts ou bossages qui s'engagent chacun dans un creux ou évidement correspondant ménagé sur la face arrière de la plaque support.

6. Plaque support selon la revendication 1,
**caractérisée par**
une conception des éléments d'assemblage (8) sous la forme d'éléments coulissants de forme identique pour opérer un assemblage coulissant entre deux plaques supports (2), afin de les assembler sans jeu.

7. Plaque support selon la revendication 6,
**caractérisée par**
une conception des éléments coulissants telle que deux éléments coulissants accolés peuvent, après pivotement de 90°, venir se glisser dans un évidement (12) correspondant ménagé sur la face arrière (6) de chacune des plaques supports (2) à assembler.

8. Plaque support selon la revendication 6 ou la revendication 7,
**caractérisée en ce que**
les éléments coulissants présentent sur trois de leurs chants une rainure (18), **en ce qu'**un évidement (12) sur la face arrière (6) de la plaque support (2) présente une languette (20), et **en ce que** l'élément coulissant inséré dans l'évidement (12) coopère avec la plaque support (2) pour former un assemblage à rainure et languette et/ou l'élément coulissant présente, en son centre, un trou oblong en tant que moyen de suspension (16) et **en ce qu'**un évidement (12) sur la face arrière (6) de la plaque support (2) présente deux bossages (22), le trou oblong (16) étant dimensionné de telle sorte que, lorsque les éléments coulissants sont insérés dans l'évidement (12), chacun des bossages (22) est logé dans le trou oblong (16), et ce au niveau des petits côtés dudit trou oblong (16).

9. Plaque support selon la revendication 1,
**caractérisée par**
une conception des éléments d'assemblage (8) sous la forme d'éléments rotatifs de forme identique pour opérer un assemblage par serrage entre deux plaques supports (2), pour les assembler sans jeu.

10. Plaque support selon la revendication 9,
**caractérisée par**
une conception de l'élément rotatif sous la forme d'un secteur de couronne circulaire (24) logé mobile en rotation ou en coulissement dans une rainure de guidage (26) ménagée sur la face arrière (6) de la plaque support (2) ou
une conception de l'élément rotatif sous la forme d'un secteur de couronne circulaire (24) logé mobile en rotation ou en coulissement dans une rainure de guidage (26) ménagée sur la face arrière (6) de la plaque support (2), le secteur de couronne circulaire (24) de l'élément rotatif présentant un élément de guidage (28) qui est agencé mobile en coulissement dans une découpe de guidage (30) ménagée sur la face arrière (6) de la plaque support (2) et l'élément de guidage (28) présentant un trou (32) pour le doigt.

11. Assemblage de plaques supports composé d'au moins deux plaques supports (2) selon l'une quelconque des revendications 1 à 10,
les plaques supports (2) étant assemblées de manière détachable et sans jeu au moyen d'au moins deux éléments d'assemblage (8) de forme identique pour former un assemblage de plaques support (34) et
les plaques supports (2) étant de taille identique ou de tailles différentes et, dans le cas de plaques supports (2) de tailles différentes, les plaques supports étant dimensionnées de manière à pouvoir être assemblées en un assemblage de plaques supports (34) sans interstices.

12. Système de plaques supports comportant au moins une plaque support (2) destinée à recevoir un objet exposé, ladite plaque support (2) présentant une surface utile (4) destinée à recevoir l'objet exposé et une face arrière (6) destinée à recevoir des éléments d'assemblage (8), et un assemblage détachable entre au moins deux plaques supports (2) pouvant être obtenu à l'aide d'au moins un élément d'assemblage (8) par plaque support (2),
**caractérisé en ce que**
sur chaque bord de plaque support (10) peut être agencé au moins un élément d'assemblage (8), les éléments d'assemblage (8) pouvant être intégrés à la face arrière (6) de la plaque support (2), et ce de telle manière que, lorsque lesdits éléments d'assemblage (8) n'opèrent aucun assemblage avec une autre plaque support (2), ils ne sont pas visibles depuis la surface utile (4),
les éléments d'assemblage (8) sont conçus pour permettre d'assembler deux plaques supports (2) ou plus dont les surfaces utiles (4) respectives sont orientées dans le même sens, de manière contigüe et sans jeu, avec les bords de plaque qui se touchent et les éléments d'assemblage (8) intégrés, lorsqu'ils n'opèrent aucun assemblage avec une autre plaque support (2), affleurent le bord de plaque support (10) respectivement adjacent, et
le système de plaques supports présente un rail de fixation (40) avec deux ou trois éléments d'assemblage de système (42) de forme identique, ou plus, les éléments d'assemblage de système (42) étant conçus pour s'engager de manière ajustée dans un évidement (12) ménagé sur la face arrière (6) de deux plaques supports (2) adjacentes et les espacements entre éléments d'assemblage de système (42) étant fonction des plaques supports (2) à fixer.

13. Procédé d'assemblage d'au moins deux plaques supports (2) selon l'une quelconque des revendications 1 à 10 et de réalisation d'un assemblage de plaques supports (34) selon la revendication 11,
dans lequel
au moins deux éléments d'assemblage (8) de forme identique permettent d'opérer un assemblage détachable entre deux plaques supports (2) dont les bords se touchent, les éléments d'assemblage (8) requis pour l'assemblage étant intégrés dans la face arrière (6) des plaques supports (2) à assembler.
